# EUROPEAN PATENT APPLICATION

(11) **EP 4 611 130 A1**
(43) Date of publication of application: **03.09.2025**
(21) Application number: 23928326.0
(22) Date of filing: 20.10.2023
(51) Int. Cl.: H01M 50/103

(54) **BATTERY CELL, BATTERY AND ELECTRIC DEVICE**

(30) Priority: 17.03.2023 CN 202310265315
(71) Applicant: Contemporary Amperex Technology (Hong Kong) Limited, Hong Kong (HK)
(72) Inventor: ZHOU, Wenlin, Ningde, Fujian 352100 (CN); XU, Liangfan, Ningde, Fujian 352100 (CN); ZHANG, Qianqian, Ningde, Fujian 352100 (CN); LI, Quankun, Ningde, Fujian 352100 (CN); WANG, Peng, Ningde, Fujian 352100 (CN); WANG, Peng, Ningde, Fujian 352100 (CN)
(74) Representative: Kraus & Lederer PartGmbB
(86) International application number: PCT/CN2023/125709
(87) International publication number: WO 2024/193022

(57) **Abstract**

This application discloses a battery cell, a battery, and a power-consuming apparatus. The battery cell includes a housing, a first insulating film, and an adhesive layer. The housing includes a first part and a second part, the first part is connected to the second part, and a surface energy of the second part is greater than a surface energy of the first part. The first insulating film covers at least one part of the housing. The adhesive layer is disposed between the second part and the first insulating film and configured to connect the first insulating film to the second part. Technical solutions provided in this application can improve reliability of the battery.

## Description

### CROSS-REFERENCE TO RELATED APPLICATIONS

This application claims priority to Chinese Patent Application No. 202310265315.8, entitled "BATTERY CELL, BATTERY, AND POWER-CONSUMING APPARATUS" and filed on March 17, 2023, which is incorporated herein by reference in its entirety.

### TECHNICAL FIELD

This application relates to the field of battery technologies, and specifically, to a battery cell, a battery, and a power-consuming apparatus.

### BACKGROUND

Energy saving and emission reduction are crucial to the sustainable development of the automobile industry, and electric vehicles become an important component of the sustainable development of the automobile industry due their advantages of energy saving and environmental protection. For the electric vehicles, battery technologies are also an important factor about their development.

During the development of the battery technologies, how to improve reliability of batteries is a technical problem to be resolved urgently in the battery technologies.

### SUMMARY

This application provides a battery cell, a battery, and a power-consuming apparatus, which can improve reliability of the battery.

This application is implemented by using the following technical solutions:

According to a first aspect, this application provides a battery cell. The battery cell includes a housing, a first insulating film, and an adhesive layer. The housing includes a first part and a second part, the first part is connected to the second part, and a surface energy of an outer surface of the second part is greater than a surface energy of an outer surface of the first part. The first insulating film covers at least one part of the housing. The adhesive layer is disposed between the second part and the first insulating film and configured to connect the first insulating film to the second part.

In the foregoing solution, by disposing the second part with the outer surface whose surface energy is greater than the surface energy of the first part, compared with a solution in which a housing includes only a first part whose surface energy is low, a bonding force between the adhesive layer and the housing can be improved, and a risk that the first insulating film falls off due to an insufficient bonding force between the adhesive layer and the housing can be reduced, thereby improving reliability of a battery.

According to some embodiments of this application, the surface energy of the outer surface of the second part is p, satisfying p > 421 N/m.

In the foregoing solution, currently, the surface energy of the outer surface of the housing of some battery cells is 421 N/m, and a bonding force between the housing and the adhesive layer is low. Therefore, to improve the bonding force between the adhesive layer and the housing, the second part with the outer surface whose surface energy is greater than 421 N/m is formed on the housing, so that a problem that the bonding force between the housing and the adhesive layer is low can be effectively alleviated, and a risk that the first insulating film falls off due to an insufficient bonding force between the adhesive layer and the housing can be reduced, thereby improving reliability of a battery.

According to some embodiments of this application, 500 N/m ≤ p ≤ 1500 N/m is satisfied.

In the foregoing solution, in an aspect, the second part with the outer surface whose surface energy is greater than 500 N/m is formed on the housing, so that a problem that the bonding force between the housing and the adhesive layer is low can be effectively alleviated, and a risk that the first insulating film falls off due to an insufficient bonding force between the adhesive layer and the housing can be reduced, thereby improving reliability of a battery. In another aspect, the surface energy of the second part is limited to being not greater than 1500 N/m, so that additional manufacturing costs of the housing added for increasing the surface energy can be effectively reduced, thereby controlling manufacturing costs of the battery.

According to some embodiments of this application, the first part is a first metal layer, and the second part is an oxide layer.

In the foregoing solution, the first part of the housing is the first metal layer, and the second part may be the oxide layer. The surface energy of the oxide layer is greater than the surface energy of the metal layer, and the adhesive layer can be effectively connected to the surface of the second part. Therefore, by disposing the adhesive layer between the first insulating film and the second part, the connection stability between the first insulating film and the housing can be effectively improved, thereby improving the reliability of the battery.

According to some embodiments of this application, the oxide layer is formed on the outer surface of the first metal layer.

In the foregoing solution, the oxide layer can be efficiently formed on the outer surface of the first metal layer in a manner such as anodizing or electroplating, so that the housing has high manufacturing efficiency, and further the manufacturing efficiency of the battery can be improved.

According to some embodiments of this application, the second part is made of chromium oxide or nickel oxide.

In the foregoing solution, in some embodiments, the second part is made of the chromium oxide. In an aspect, the bonding force between the housing and the adhesive layer can be effectively improved, thereby improving the connection strength between the housing and the first insulating film, and reducing the risk that the first insulating film falls off. In another aspect, the chromium oxide can improve the corrosion resistance of the housing. Therefore, the second part made of the chromium oxide enables the battery to have high reliability. In some embodiments, the second part is made of the nickel oxide. In an aspect, the bonding force between the housing and the adhesive layer can be effectively improved, thereby improving the connection strength between the housing and the first insulating film, and reducing the risk that the first insulating film falls off. In another aspect, the nickel oxide has a good insulation property, and therefore, the risk of internal short-circuiting of the battery cell can be reduced. Therefore, the second part made of the nickel oxide enables the battery to have high reliability.

According to some embodiments of this application, the first part is made of aluminum, and the second part is made of aluminum oxide.

In the foregoing solution, the first part is made of aluminum, and the second part is made of aluminum oxide, so that the second part can be formed on the first part at low costs, thereby reducing manufacturing costs of the battery cell, and further reducing manufacturing costs of the battery.

According to some embodiments of this application, a thickness of the second part is M, satisfying 18 um ≤ M ≤ 100 um.

In the foregoing solution, if the thickness of the second part, that is, the oxide layer, is excessively small, for example, is less than 18 um, the bonding force between the adhesive layer and the second part is small, a risk that the first insulating film falls off is high. If the thickness of the second part is excessively large, for example, is greater than 100 um, the volume of the housing is increased, and the volume energy density of the battery cell is affected. Therefore, in some embodiments of this application, the thickness M of the second part is limited to being between 18 um and 100 um, so that there is a large bonding force between the adhesive layer and the second part. In this way, the battery cell has a high volume energy density, and further the battery has high reliability.

According to some embodiments of this application, a surface of the second part connected to the adhesive layer is a bumpy surface.

In the foregoing solution, the surface of the second part that is in contact with the adhesive layer is set as a bumpy surface, so that the acting area between the adhesive layer and the second part can be increased, thereby improving the bonding force between the adhesive layer and the second part, and improving the connection strength between the first insulating film and the housing. Therefore, the battery has high reliability.

According to some embodiments of this application, the first part is a second metal layer, and the second part is a third metal layer.

In the foregoing solution, in some embodiments, the material of the housing of the battery cell, that is, the material of the first part, may be made of aluminum or another metal material having a low surface energy. To improve the stability between the first insulating film and the housing in the some embodiments, a metal material having a high surface energy may be set. For example, the surface energy of iron is higher than the surface energy of aluminum. Therefore, the material of the second part may be iron or another metal material having a surface energy higher than that of aluminum, to improve the connection strength between the first insulating film and the housing, so that the battery has high reliability.

According to some embodiments of this application, the first part is a non-metal layer, and the second part is a fourth metal layer and/or an oxide layer.

In the foregoing solution, to reduce manufacturing costs of the battery, the housing of the battery cell may be made of a non-metal material. That is, the first part of the housing may be a non-metal layer. The material of the non-metal layer includes but is not limited to plexiglass or polypropylene. However, the surface energy of the non-metal layer is low. Therefore, the second part may be disposed, and the second part may be a fourth metal layer or an oxide layer having a large surface energy, to alleviate a problem that the bonding force between the first part and the adhesive layer is low, and reduce a risk that the first insulating film falls off due to an insufficient bonding force between the adhesive layer and the housing, thereby improving reliability of the battery.

According to some embodiments of this application, the outer surface of the second part is higher than the outer surface of the first part, or the outer surface of the second part is flush with the outer surface of the first part, or the outer surface of the second part is lower than the outer surface of the first part in a thickness direction of the housing.

In the foregoing solution, in some embodiments, the outer surface of the second part is higher than the outer surface of the first part, so as to facilitate connection to the adhesive layer, thereby facilitating assembly of the first insulating film. In some embodiments, the outer surface of the second part may be flush with the outer surface of the first part, so as to reduce as much as possible the extent to which a joint among the first insulating film, the adhesive layer, and the second part protrudes relative to the entire outer contour of the battery cell, thereby improving the flatness of the outer contour of the battery cell. In some embodiments, the outer surface of the second part may be lower than the outer surface of the first part, thereby effectively reducing the extent to which a joint among the first insulating film, the adhesive layer, and the second part protrudes relative to the entire outer contour of the battery cell, and improving flatness of the outer contour of the battery cell.

According to some embodiments of this application, a melting point of the adhesive layer is P1, a melting point of the first insulating film is P2, and |P1 - P2| ≤ 30 in unit of °C is satisfied.

In the foregoing solution, a difference between the melting point P1 of the adhesive layer and the melting point P2 of the first insulating film is 30°C, that is, the adhesive layer and the first insulating film have similar melting points, thereby facilitating interconnection between the adhesive layer and the first insulating film. In some embodiments, the adhesive layer and the first insulating film may be in a hot-melting connection. Because the adhesive layer and the first insulating film have similar melting points, it is easy to hot-melt the adhesive layer and the first insulating film to each other, thereby reducing the difficulty in connection between the adhesive layer and the first insulating film, improving connection strength between the adhesive layer and the first insulating film, and reducing a risk that the first insulating film falls off, so that the battery has high reliability.

According to some embodiments of this application, the first insulating film is in a hot-melting connection to the adhesive layer.

In the foregoing solution, the first insulating film and the adhesive layer are in a hot-melting connection, thereby improving connection strength between the adhesive layer and the first insulating film, and reducing a risk that the first insulating film falls off, so that the battery has high reliability.

According to some embodiments of this application, the battery cell further includes a second insulating film, and the second insulating film is connected to a surface of the first insulating film facing away from the adhesive layer.

In the foregoing solution, the second insulating film is disposed on the outer surface of the first insulating film, so that the housing can be further protected, and therefore, the battery has high reliability.

According to some embodiments of this application, the first insulating film is in a hot-melting connection to the second insulating film.

In the foregoing solution, the first insulating film and the second insulating film are in a hot-melting connection. In an aspect, the difficulty in connection between the first insulating film and the second insulating film can be reduced. In another aspect, the connection strength between the first insulating film and the second insulating film can be improved, and the risk that the second insulating film falls off can be reduced, so that the battery has high reliability.

According to some embodiments of this application, the housing includes a case and an end cover, the case has an opening, the end cover is connected to the case and closes the opening, and the end cover is connected to the case to form a first connecting portion. the first insulating film covers the first connecting portion.

In the foregoing solution, the first connecting portion formed by connecting the end cover to the case is a weak part of the housing. When the battery cell is impacted, an electrolyte in the housing is prone to leak from the first connecting portion. Therefore, the first connecting portion can be protected by covering the first connecting portion with the first insulating film, to reduce a risk of leakage of the electrolyte, so that the battery has high reliability.

According to some embodiments of this application, the first insulating film includes a first insulating sub-film and a second insulating sub-film, the first insulating sub-film covers at least one part of an outer surface of the end cover, and the second insulating sub-film covers at least one part of an outer surface of the case. the second insulating sub-film is connected to the second part by using the adhesive layer to form a second connecting portion, and the second connecting portion is disposed in a circumferential direction of the opening.

In the foregoing solution, the second insulating sub-film is connected to the second part by using the adhesive layer to form the second connecting portion, and the second connecting portion is disposed in the circumferential direction of the opening. In an aspect, a risk that a part of the first insulating film corresponding to the second connecting portion is separated from the case can be reduced. In another aspect, the second connecting portion collaborates with the first insulating sub-film of the first insulating film, to enable the first insulating film to hold a part from the first connecting portion to the end cover, thereby reducing a risk that the electrolyte leaking from the first connecting portion leaks out of the first insulating film and affects an object outside the battery cell (for example, an adjacent battery cell, another component, or the external environment), so that the battery has high reliability.

According to some embodiments of this application, the battery cell further includes an electrode terminal, the electrode terminal is mounted on the housing, the first insulating film has a first through-hole for exposing the electrode terminal, and the first insulating film is connected to the second part by using the adhesive layer to form a third connecting portion. The third connecting portion is disposed around the electrode terminal.

In the foregoing solution, in an aspect, the first through-hole is disposed on the first insulating film, so that the electrode terminal can be exposed to implement output and input of electric energy of the battery cell. In another aspect, the first insulating film is connected to the second part by using the adhesive layer to form the third connecting portion, thereby improving connection strength between the surrounding insulating film corresponding to the electrode terminal and the housing, effectively protecting the part of the housing on which the electrode terminal is mounted, and reducing a risk that the electrolyte leaks from the part of the housing on which the electrode terminal is mounted, or reducing a risk that the battery cell is short-circuited because the electrolyte leaking from another part (the electrolyte leaking from another part of the housing or the electrolyte leaking from another battery cell) enters the battery cell from the part of the housing on which the electrode terminal is mounted, so that the battery has high reliability.

According to some embodiments of this application, the outer surface of the housing is provided with a protrusion, the protrusion is disposed around the electrode terminal, and the protrusion is exposed by the first through-hole.

In the foregoing solution, the protrusion is disposed, and the protrusion is disposed around the electrode terminal, so as to protect the electrode terminal and block flow of the electrolyte, thereby reducing a risk that the battery cell is short-circuited because the electrolyte leaks from a part of the case on which the electrode terminal is not mounted and acts on the electrode terminal, and improving reliability of the battery. In some embodiments, when the battery cell is inverted, or the electrode terminal is a component of the battery cell that is close to the ground, the electrolyte falls in drops in a direction from the protrusion to the ground under the effect of gravity due to disposition of the protrusion, thereby reducing a risk that the electrolyte acts on the electrode terminal.

According to some embodiments of this application, the third connecting portion is disposed in a circumferential direction of the protrusion and is located on an outer side of the protrusion.

In the foregoing solution, the third connecting portion is located on an outer side the protrusion, that is, the third part does not interfere with the protrusion, thereby effectively reducing the difficulty in connection among the second part, the adhesive layer, and the first insulating film, and improving manufacturing efficiency of the battery cell.

According to some embodiments of this application, the battery cell further includes a pressure-relief portion, the pressure-relief portion is disposed on the housing, and the first insulating film covers the pressure-relief portion. the first insulating film is connected to the second part by using the adhesive layer to form a fourth connecting portion, and the fourth connecting portion is disposed around the pressure-relief portion.

In the foregoing solution, the first insulating film covers the pressure-relief portion, and the first insulating film is connected to the second part by using the adhesive layer to form the fourth connecting portion. The fourth connecting portion is disposed around the pressure-relief portion, to reduce a risk that the surrounding insulating film corresponding to the pressure-relief portion is separated from the housing, thereby reducing a risk that the electrolyte leaks from the part of the housing on which the pressure-relief portion is disposed, or reducing a risk that the electrolyte leaking from the part of the housing on which the pressure-relief portion is disposed leaks out of the insulating film, so that the battery has high reliability.

According to some embodiments of this application, the housing is provided with a liquid injection hole, the battery cell further includes a plugging member, the plugging member plugs the liquid injection hole, and the first insulating film covers the plugging member. The insulating film is connected to the second part by using the adhesive layer to form a fifth connecting portion, and the fifth connecting portion is disposed around the liquid injection hole.

In the foregoing solution, the first insulating film covers the plugging member, and the insulating film is connected to the second part by using the adhesive layer to form the fifth connecting portion. The fifth connecting portion is disposed around the pressure-relief portion, to reduce a risk that the surrounding insulating film corresponding to the plugging member is separated from the housing, thereby reducing a risk that the electrolyte leaks from the part of the housing on which the plugging member is mounted, or reducing a risk that the electrolyte leaking from the part of the housing on which the plugging case is mounted leaks out of the insulating film, so that the battery has high reliability.

According to a second aspect, this application further provides a battery. The battery includes any battery cell according to the first aspect.

According to a second aspect, this application further provides a power-consuming apparatus. The power-consuming apparatus includes any battery according to the second aspect or any battery cell according to the first aspect.

The above description only refers to an overview of the technical solution of this application. In order to understand the technical means of this application more clearly, it can be implemented according to the content of the description. In order to make the above-mentioned and other purposes, features and advantages of this application more apparent, the specific implementations of this application are listed below.

### BRIEF DESCRIPTION OF THE DRAWINGS

To describe the technical solutions of the embodiments of this application more clearly, the following briefly describes the accompanying drawings required for describing the embodiments. It should be understood that, the following accompanying drawings show only some embodiments of this application, which cannot be considered as limitation on the scope. A person of ordinary skill in the art may still derive other accompanying drawings from the accompanying drawings without creative efforts.
FIG. 1 is a schematic diagram of a vehicle according to some embodiments of this application;
FIG. 2 is a three-dimensional exploded view of a battery according to some embodiments of this application;
FIG. 3 is a schematic diagram of a battery cell according to some embodiments of this application;
FIG. 4 is a three-dimensional exploded view of a battery cell having a first insulating film hidden according to some embodiments of this application;
FIG. 5 is a schematic diagram of a first part, a second part, an adhesive layer, and a first insulating film according to some embodiments of this application;
FIG. 6 is an internal schematic diagram of a battery cell according to some embodiments of this application;
FIG. 7 is an enlarged view at a position A in FIG. 6;
FIG. 8 is an enlarged view at a position B in FIG. 6;
FIG. 9 is a schematic diagram of a battery cell according to some other embodiments of this application; and
FIG. 10 is a schematic diagram of a first part, a second part, an adhesive layer, a first insulating film, and a second insulating film according to some embodiments of this application.

Reference numerals: 10-battery cell; 11a-electrode assembly; 11-housing; 110-first part; 111-second part; 112-case; 1120-opening; 113-end cover; 114-liquid injection hole; 12-first insulating film; 120-first insulating sub-film; 121-second insulating sub-film; 122-first through-hole; 13-adhesive layer; 14-electrode terminal; 15-protrusion; 16-pressure-relief portion; 17-plugging member; 18-second insulating film; 21-first connecting portion; 22-second connecting portion; 23-third connecting portion; 24-fourth connecting portion; 25-fifth connecting portion; 1000-vehicle; 200-controller; 300-motor; 100-battery; 30-box; 31-upper box; and 32-lower box.

### DETAILED DESCRIPTION

In order to make the objectives, technical solutions, and advantages of the embodiments of this application clearer, the technical solutions in the embodiments of this application will be clearly described with reference to the accompanying drawings in the embodiments of this application. Obviously, it is a part of the embodiments of this application, but not all the embodiments. All other embodiments obtained by a person of ordinary skill in the art based on the embodiments of this application without making creative efforts shall fall within the protection scope of this application.

Unless otherwise defined, all technical and scientific terms used in this application have same meanings as commonly understood by a person skilled in the technical field of this application. The terms used in the claimed specification in this application are merely for an objective of describing specific embodiments, and are not intended to limit this application. The terms "include", "include" and any variations thereof in the specification and claims of this application and in the above descriptions of the accompanying drawings are intended to cover non-exclusive inclusion. In the specification and claims, or accompanying drawings of this application, the terms "first", "second", or the like are intended to distinguish between different objects but do not indicate a particular order or primary-secondary relationship.

Reference to "an embodiment" in this application means that a particular feature, structure or characteristic described in combination with the embodiment may be included in at least one embodiment of this application. The appearances of the phrase in various places in the specification are not necessarily all referring to the same embodiment, nor a separate or alternative embodiment that is mutually exclusive of other embodiments.

In the description of this application, it should be noted that unless otherwise explicitly specified or defined, the terms such as "mount", "connect", "connection", and "attach" should be understood in a broad sense. For example, the connection may be a fixed connection, a detachable connection, or an integral connection; or the connection may be a direct connection, an indirect connection through an intermediary, or internal communication between two components. A person of ordinary skill in the art may understand specific meanings of the terms in this application according to specific situations.

The term "and/or" in this application describes only an association relationship for describing associated objects and represents that three relationships may exist. For example, A and/or B may represent the following three cases: Only A exists, both A and B exist, and only B exists. In addition, in this application, the character "/" usually indicates an "or" relationship between the associated objects.

In the embodiments of this application, same reference numerals represent same components, and for brevity, detailed descriptions of same components are omitted in different embodiments. It should be understood that the dimensions, such as the thickness, the length, and the width, of various components in the embodiments of this application and the dimensions such as the entire thickness, length, and the width, of an integrated apparatus shown in the accompanying drawings are merely exemplary descriptions, and should not be construed as any limitation on this application.

"Plurality of" appearing in this application means two or more (including two).

In this application, a battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, or the like, which is not limited in the embodiments of this application. The battery cell may be cylindrical, flat, cuboid, or in other shapes, which is not limited in the embodiments of this application either.

A battery mentioned in embodiments of this application is a single physical module including one or more battery cells to provide a higher voltage and a higher capacity. The battery generally includes a box for packaging the one or more battery cells. The box can prevent liquids or other foreign objects from affecting the charging or discharging of the battery cells.

The battery cell includes an electrode assembly and an electrolyte, and the electrode assembly is formed by a positive electrode plate, a negative electrode plate, and a separator. The battery cell works mainly relying on the movement of metal ions between the positive electrode plate and the negative electrode plate. The positive electrode plate includes a positive electrode current collector and a positive electrode active substance layer, the positive electrode active substance layer is coated to a surface of the positive electrode current collector, the positive electrode current collector not coated with the positive electrode active substance layer protrudes out of the positive electrode current collector already coated with the positive electrode active substance layer, and the positive electrode current collector not coated with the positive electrode active substance layer is used as a positive electrode tab. By using the lithium-ion battery as an example, a material of the positive electrode current collector may be aluminum, and a positive electrode active substance may be lithium cobalt oxide, lithium iron phosphate, ternary lithium, lithium manganese oxide, or the like. The negative electrode plate includes a negative electrode current collector and a negative electrode active substance layer, a surface of the negative electrode current collector is coated with the negative electrode active substance layer, the negative electrode current collector not coated with the negative electrode active substance layer protrudes from the negative electrode collector already coated with the negative electrode active substance layer, and the negative electrode current collector not coated with the negative electrode active substance layer is used as a negative electrode tab. A material of the negative electrode current collector may be copper, and a negative electrode active substance may be carbon, silicon, or the like. To cause fusing not to occur when a large current passed through, there are a plurality of positive electrode tabs and the positive electrode tabs are laminated, and there are a plurality of negative electrode tabs and the negative electrode tabs are laminated. The separator may be made of a material such as polypropylene (PP), polyethylene (PE), or the like. In addition, the electrode assembly may be either of a winding type structure or a stacked structure, which is not defined in the embodiments of this application.

Nowadays, from the perspective of development of the market situation, the batteries are applied increasingly. The batteries are not only used in energy storage power systems such as water power plant, fire power plant, wind power plant and solar power plant, but also in electric transportations such as electric bicycles, electric motorcycles, electric vehicles, as well as in military equipment, aerospace and other fields. With continuous expansion of application fields of batteries, market demands for batteries are also expanding.

Development of battery technologies needs to consider design factors in many aspects, for example, performance parameters such as a battery life, an energy density, a discharging capacity, and a charging/discharging rate. In addition, reliability of batteries needs to be further considered. However, reliability of current batteries is poor. The battery cell includes a housing and an insulating film. The insulating film is connected to an outer surface of the housing by using an adhesive layer, so as to protect or safeguard the housing. In an aspect, a risk that a foreign object causes damage to the housing is reduced. In another aspect, a risk that an electrolyte in the housing leaks can be reduced. However, the housing is generally a metal housing having a low surface energy, such as an aluminum housing. Because the surface energy of the aluminum is low, the bonding force between the housing and the adhesive layer is low. Consequently, the connection strength between the insulating film and the housing is not high, and the risk that the insulating film is separated from the housing is high. As a result, the reliability of the battery is low.

In view of this, to resolve the problem that the reliability of the battery is low because the insulating film is easily separated from the housing, some embodiments of this application design a battery cell. The battery cell includes a housing, an insulating film, and an adhesive layer. The housing includes a first part and a second part that are connected. The first part may be considered as a part of the current housing, the second part may be considered as a part formed by machining the housing based on the first part, and a surface energy of an outer surface of the second part is higher than a surface energy of an outer surface of the first part. The insulating film covers at least one part of the housing, to protect or safeguard the at least one part. The adhesive layer is disposed between the second part and the insulating film, so as to connect the insulating film to the second part.

Compared with a solution in which the insulating film is directly connected to the first part having a small surface energy (for example, when the housing is an aluminum housing, the first part is made of aluminum) by using the adhesive layer, in the foregoing solution, the housing includes the first part having a low surface energy and the second part having a large surface energy. In an aspect, the first part is reserved, and the second part is additionally formed, to control manufacturing costs of the housing. In another aspect, the first part is disposed to effectively protect the electrode assembly and the electrolyte inside the battery cell. In still another aspect, because there is a high bonding force between the second part and the adhesive layer, the connection strength between the insulating film and the housing can be improved, and a risk that the insulating film falls off can be reduced, so that the battery has high reliability.

The technical solutions described in the embodiments of this application are applicable to a battery and a power-consuming apparatus using a battery.

The power-consuming apparatus may be a vehicle, a mobile phone, a portable device, a notebook computer, a ship, a spacecraft, an electric toy, a power tool, and the like. The spacecraft includes an airplane, a rocket, a space shuttle, a spaceship and the like; the electronic toy includes a fixed or mobile electronic toy, such as a game console, an electric vehicle toy, an electric ship toy, an electric aircraft toy, and the like; and the power tool includes a metal-cutting power tool, a grinding power tool, an assembly power tool, and a railway power tool, such as an electric drill, an electric grinder, an electric wrench, an electric screwdriver, an electric hammer, an electric impact drill, a concrete vibrator, an electric planer, and the like. The foregoing power-consuming apparatus is not specifically limited in the embodiments of this application.

For ease of description, the following embodiments are described by using an example in which the power-consuming apparatus is a vehicle 1000.

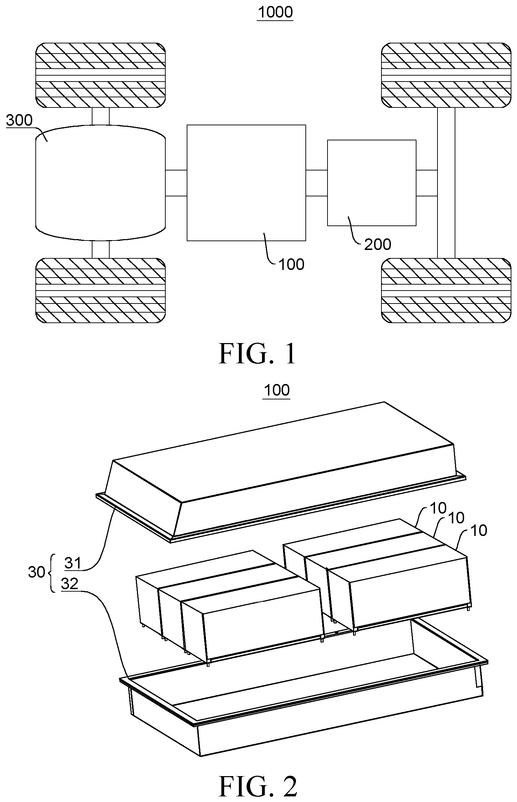

Referring to FIG. 1, FIG. 1 is a schematic diagram of a vehicle 1000 according to some embodiments of this application. The vehicle 1000 may be a fuel powered vehicle, a gas powered vehicle, or a new energy vehicle. The new energy vehicle may be a pure electric vehicle, a hybrid electric vehicle, or an extended range vehicle, etc. The vehicle 1000 is internally provided with a battery 100. The battery 100 may be arranged at the bottom, head, or tail of the vehicle 1000. The battery 100 may be configured to supply power to the vehicle 1000. For example, the battery 100 may be used as a power supply for operating the vehicle 1000. The vehicle 1000 may further include a controller 200 and a motor 300. The controller 200 is configured to control the battery 100 to supply power to the motor 300, for example, to meet working power requirements during starting, navigation, and traveling of the vehicle 1000.

In some embodiments of this application, the battery 100 can not only serve as a power supply for operating the vehicle 1000, but can also serve as a power supply for driving the vehicle 1000, in place of or partially in place of fuel or natural gas, to provide driving power for the vehicle 1000.

Referring to FIG. 2, FIG. 2 is a three-dimensional exploded view of a battery 100 according to some embodiments of this application. The battery 100 includes a box 30 and battery cells 10, where the battery cells 10 are accommodated in the box 30. The box 30 is configured to provide an accommodating space for the battery cells 10. The box 30 may use a variety of structures. In some embodiments, the box 30 may include an upper box 31 and a lower box 32, the upper box 31 and the lower box 32 cover each other, and the upper box 31 and the lower box 32 jointly define the accommodating space for accommodating the battery cells 10. The lower box 32 may be a hollow structure with one end being open, the upper box 31 may be a plate-like structure, and the upper box 31 covers an open side of the lower box 32, so that the upper box 31 and the lower box 32 jointly define the accommodating space. Alternatively, the upper box 31 and the lower box 32 each may be a hollow structure with one side being open, and an open side of the upper box 31 covers an open side of the lower box 32. Certainly, the box 30 formed by the upper box 31 and the lower box 32 may be in various shapes, such as a cylinder, and a cuboid.

In the battery 100, there may be a plurality of battery cells 10, and the plurality of battery cells 10 can be connected in series, parallel, or series-parallel. Series-parallel connection means that both series connection and parallel connection exist among the plurality of battery cells 10. The plurality of battery cells 10 may be directly connected in series, parallel, or series-parallel together, and then the whole formed by the plurality of battery cells 10 may be accommodated in the box 30. Certainly, the battery 100 may also be in the form of a battery 100 module formed by the plurality of battery cells 10 that are first connected in series, parallel, or series-parallel. A plurality of battery 100 modules are then connected in series, parallel, or series-parallel to form a whole and accommodated in the box 30. The battery 100 may also include other structures, for example, the battery 100 may also include a bus component for achieving the electrical connection between the plurality of battery cells 10.

Each battery cell 10 may be a secondary battery cell or a primary battery cell, or may be a lithium-sulfur battery cell, a sodium-ion battery cell, or a magnesium-ion battery cell, but is not limited thereto. The battery cell 10 may be cylindrical, flat, cuboid, or in other shapes.

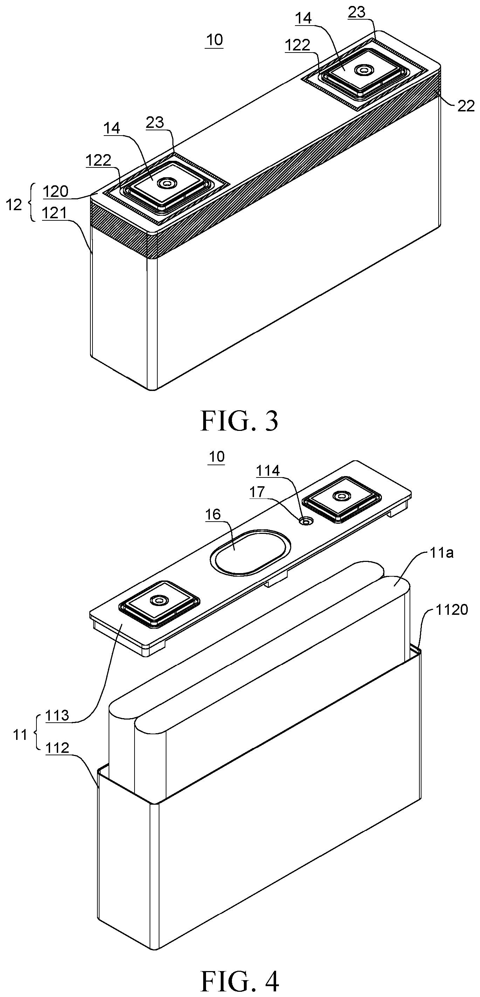

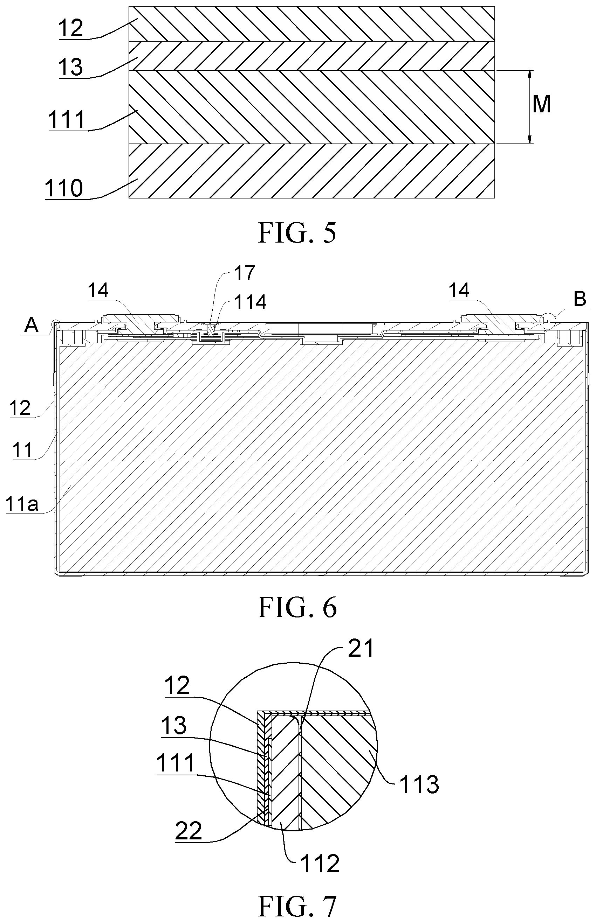

According to some embodiments of this application, a battery cell 10 is provided. Referring to FIG. 3 to FIG. 5, FIG. 3 is a schematic diagram of a battery cell 10 according to some embodiments of this application, FIG. 4 is a three-dimensional exploded view of a battery cell 10 having a first insulating film 12 hidden according to some embodiments of this application, and FIG. 5 is a schematic diagram of a first part 110, a second part 111, an adhesive layer 13, and a first insulating film 12 according to some embodiments of this application.

The battery cell 10 includes a housing 11, a first insulating film 12, and an adhesive layer 13. The housing 11 includes the first part 110 and the second part 111. A surface energy of an outer surface of the second part 111 is greater than a surface energy of an outer surface of the first part 110. The first insulating film 12 covers at least one part of the housing 11. The adhesive layer 13 is disposed between the second part 111 and the first insulating film 12 and configured to connect the first insulating film 12 to the second part 111.

The housing 11 is a component having an accommodating cavity therein to accommodate an electrode assembly 11a and an electrolyte. In some embodiments, the housing 11 may be a metal housing, and may be made of a metal material, such as aluminum, aluminum alloy, or copper. In some other embodiments, the housing 11 may be a non-metal housing, and may be made of a material such as plexiglass or polypropylene.

That the first part 110 and the second part 111 are connected may mean that edges of the first part 110 and the second part 111 are connected to each other. For example, the first part 110 and the second part 111 are stacked in a thickness direction of the housing. For another example, the first part 110 and the second part 111 are sequentially disposed in a height direction or a width direction of the housing. For another example, the second part 111 is surrounded by the first part 110. For another example, the first part 110 is surrounded by the second part 111. For another example, the second part 111 and the first part 110 cross each other.

In some embodiments, the housing may include two end walls that are disposed opposite to each other in a height direction of the housing, and the first part 110 and/or the second part 111 may be disposed on the two end walls. The housing may include a side wall disposed around the two opposite end walls, and the first part and/or the second part may be disposed on the side wall. The second part 111 may be disposed on at least one part of the two end walls and the side wall of the housing.

That the surface energy of the outer surface of the second part 111 is greater than the surface energy of the outer surface of the first part 110 may mean that a bonding capability of the outer surface of the second part 111 is greater than a bonding capability of the outer surface of the first part 110. In some embodiments, a surface energy of a part may be considered as a bonding force between the part and the adhesive layer 13, and may be measured by using a peeling test method, for example, may be measured by using a peeling tester, and a unit of the surface energy may be N/m.

The outer surface of the second part 111 may refer to a surface of the second part 111 that faces away from the inside of the housing, and may be connected to the first insulating film 12 by using the adhesive layer 13. The outer surface of the first part 110 may refer to a surface of the first part 110 that faces away from the inside of the housing. In some implementations, the second part 111 may cover the outer surface of the first part 110. In some other embodiments, the second part 111 may expose at least one part of the outer surface of the first part 110.

In some embodiments, the second part 111 may be formed on the surface of the first part 110. For example, the second part 111 is formed on the surface of the first part 110 in a mechanical surface treatment manner such as sand blasting, shot blasting, buffing, tumbling, polishing, brushing, spraying, or painting. For another example, the second part 111 is formed on the surface of the first part 110 in a chemical surface treatment manner such as bluing or blackening, phosphatizing, pickling, electroless plating of various types of metal and alloy, and chemical oxidation. For another example, the second part 111 is formed on the surface of the first part 110 in an electrochemical surface treatment manner such as anodizing, electrochemical polishing, or electroplating. For another example, the second part 111 is formed on the surface of the first part 110 in a modern surface treatment manner such as chemical vapor deposition, physical vapor deposition, ion injection, ion plating, or laser surface treatment.

In some embodiments, when being not made of the same type of material, the second part 111 and the first part 110 may be connected to each other through a process such as riveting or welding and form the housing that can accommodate the electrode assembly and the electrolyte.

The first insulating film 12 is a film-shaped component having an insulation feature, can cover at least one part of the housing 11 or cover the entire housing 11, to protect or safeguard the housing 11, and can reduce a risk that a foreign object causes damage to an outer surface of the housing 11. In some embodiments, a person skilled in the art refers to the first insulating member as a blue film.

The adhesive layer 13 is a component disposed between the second part 111 and the first insulating film 12, is sticky, and can be bonded to the second part 111. In some embodiments, when the outer surface of the second part 111 is the outer surface of the housing 11, that is, all of the outer surface of the housing 11 is the second part 111, the adhesive layer 13 may be connected to all or a part of the outer surface of the housing 11. In some embodiments, when the outer surface of the housing 11 is formed by the outer surface of the second part 111 and the outer surface of the first part 110, the adhesive layer 13 may be connected to all of the outer surface of the housing 11, all of the outer surface of the second part 111, or a part of the outer surface of the second part 111.

Compared with a solution in which the first insulating film 12 is directly connected to the first part 110 having a small surface energy (for example, when the housing is an aluminum housing, the first part 110 is made of aluminum) by using the adhesive layer 13, in the foregoing solution, the housing 11 includes the first part 110 having a low surface energy and the second part 111 having a large surface energy. In an aspect, the first part 110 is reserved, and the second part 111 is additionally formed, to control manufacturing costs of the housing 11. In another aspect, the first part 110 is disposed to effectively protect the electrode assembly and the electrolyte inside the battery cell 10. In still another aspect, because there is a high bonding force between the second part 111 and the adhesive layer 13, a risk that the first insulating film 12 falls off due to a low bonding force between the adhesive layer 13 and the housing 11 is reduced, thereby improving reliability of the battery 100.

According to some embodiments of this application, the surface energy of the outer surface of the second part 111 is p, satisfying p > 421 N/m.

In some embodiments, when the housing is an aluminum housing, that is, a conventional aluminum housing, the surface energy of the housing, that is, the bonding force between the housing and the adhesive layer 13 may be measured by using a peeling test method. For example, the surface energy may be measured by using a peeling tester, and a measured value is 421 N/m. Therefore, for a current conventional aluminum housing, a problem that the bonding force between the housing and the adhesive layer is low can be alleviated by disposing the second part whose surface energy p is greater than 421 N/m on the conventional aluminum housing.

In the foregoing solution, currently, the surface energy of the outer surface of the housing of some battery cells is 421 N/m, and a bonding force between the housing and the adhesive layer 13 is low. Therefore, to improve the bonding force between the adhesive layer 13 and the housing 11, the second part 111 with the outer surface whose surface energy is greater than 46 N/m is formed on the housing 11, so that a problem that the bonding force between the housing 11 and the adhesive layer 13 is low can be effectively alleviated, and a risk that the first insulating film 12 falls off due to an insufficient bonding force between the adhesive layer 13 and the housing 11 can be reduced, thereby improving reliability of a battery.

According to some embodiments of this application, 500 N/m ≤ p ≤ 1500 N/m is satisfied.

For a current conventional aluminum housing, a problem that the bonding force between the housing 11 and the adhesive layer 13 is low can be alleviated by disposing the second part 111 whose surface energy p is greater than 421 N/m on the conventional aluminum housing. To further improve the bonding force between the housing 11 and the adhesive layer 13, a material or a structure whose surface energy ranges from 500 N/m to 1000 N/m may be selected for the second part 111.

In the foregoing solution, in an aspect, the second part 111 with the outer surface whose surface energy is greater than 500 N/m is formed on the housing 11, so that a problem that the bonding force between the housing 11 and the adhesive layer 13 is low can be effectively alleviated, and a risk that the first insulating film 12 falls off due to an insufficient bonding force between the adhesive layer and the housing can be reduced, thereby improving reliability of a battery. In another aspect, the surface energy of the second part 111 is limited to being not greater than 1500 N/m, so that additional manufacturing costs of the housing 11 added for increasing the surface energy can be effectively reduced, thereby controlling manufacturing costs of the battery.

According to some embodiments of this application, the first part 110 is a first metal layer, and the second part 111 is an oxide layer.

In some embodiments, when the housing 11 is made of aluminum, the first part 110 may be an aluminum layer. The second part 111 may be an oxide layer formed on the outer surface of the first part 110, such as an aluminum oxide layer, a chromium oxide layer, or a nickel oxide layer.

In some embodiments, the surface of the oxide layer may have a cellular morphology. Therefore, the connection area between the adhesive layer 13 and the second part 111 is large, and a high bonding force between the second part 111 and the adhesive layer 13 can be improved. By being connected to the adhesive layer 13, the first insulating film 12 is connected to the housing 11.

In the foregoing solution, the first part 110 of the housing 11 is the first metal layer, and the second part 111 may be the oxide layer. The surface energy of the oxide layer is greater than the surface energy of the metal layer, and the adhesive layer 13 can be effectively connected to the surface of the second part 111. Therefore, by disposing the adhesive layer 13 between the first insulating film 12 and the second part 111, the connection stability between the first insulating film 12 and the housing 11 can be effectively improved, thereby improving the reliability of the battery.

According to some embodiments of this application, the oxide layer is formed on the outer surface of the first metal layer.

In the foregoing solution, the oxide layer can be efficiently formed on the outer surface of the first metal layer in a chemical surface treatment manner such as chemical oxidation, or in an electrochemical surface treatment manner such as anodizing or electroplating, so that the housing 11 has high manufacturing efficiency, and further the manufacturing efficiency of the battery can be improved.

According to some embodiments of this application, the second part 111 is made of chromium oxide or nickel oxide.

In some embodiments, the chromium oxide or the nickel oxide may be formed on the first part 110 by using a method such as an electroplating process or a sputtering process.

In the foregoing solution, in some embodiments, the second part 111 is made of the chromium oxide. In an aspect, the bonding force between the housing 11 and the adhesive layer 13 can be effectively improved, thereby improving the connection strength between the housing 11 and the first insulating film 12, and reducing the risk that the first insulating film 12 falls off. In another aspect, the chromium oxide can improve the corrosion resistance of the housing 11. Therefore, the second part 111 made of the chromium oxide enables the battery 100 to have high reliability. In some embodiments, the second part 111 is made of the nickel oxide. In an aspect, the bonding force between the housing 11 and the adhesive layer 13 can be effectively improved, thereby improving the connection strength between the housing 11 and the first insulating film 12, and reducing the risk that the first insulating film 12 falls off. In another aspect, the nickel oxide has a good insulation property, and therefore, the risk of internal short-circuiting of the battery cell 10 can be reduced. Therefore, the second part 111 made of the nickel oxide enables the battery 100 to have high reliability.

According to some embodiments of this application, the first part 110 is made of aluminum, and the second part 111 is made of aluminum oxide.

In some embodiments, aluminum oxide may be formed on the surface of the first part 110 through an anodizing process.

In the foregoing solution, the first part 110 is made of aluminum, and the second part 111 is made of aluminum oxide, so that the second part 111 can be formed on the first part 110 at low costs, thereby reducing manufacturing costs of the battery cell 10, and further reducing manufacturing costs of the battery 100.

According to some embodiments of this application, with reference to FIG. 5, a thickness of the second part 111 is M, satisfying 18 um ≤ M ≤ 100 um.

In some embodiments, the thickness M of the second part 111 may have a value of 18 um, 19 um, 20 um, 21 um, ..., 97 um, 98 um, 99 um, or 100 um.

In the foregoing solution, if the thickness of the second part 111 is excessively small, for example, is less than 18 um, the bonding force between the adhesive layer 13 and the second part 111 is small, a risk that the first insulating film 12 falls off is high. If the thickness of the second part 111 is excessively large, for example, is greater than 100 um, the volume of the housing 11 is increased, and the volume energy density of the battery cell 10 is affected. Therefore, in some embodiments of this application, the thickness M of the second part 111 is limited to being between 18 um and 100 um, so that there is a large bonding force between the adhesive layer 13 and the second part 111. In this way, the battery cell 10 has a high volume energy density, and further the battery 100 has high reliability.

According to some embodiments of this application, a surface of the second part 111 connected to the adhesive layer 13 is a bumpy surface.

In some embodiments, the outer surface of the second part 111 may be a bumpy surface. For example, a pattern is printed on the outer surface of the second part 111, so that the outer surface of the second part 111 is bumpy, thereby improving the surface area of the outer surface of the second part 111.

In the foregoing solution, the surface of the second part 111 that is in contact with the adhesive layer 13 is set as a bumpy surface, so that the acting area between the adhesive layer 13 and the second part 111 can be increased, thereby improving the bonding force between the adhesive layer 13 and the second part 111, and improving the connection strength between the first insulating film 12 and the housing 11. Therefore, the battery 100 has high reliability.

According to some embodiments of this application, the first part is a second metal layer, and the second part is a third metal layer.

In some embodiments, when the housing 11 is made of aluminum, the first part 110 may be an aluminum layer. The second part 111 may be a metal layer having a surface energy greater than that of aluminum. For example, the second part is an iron layer.

In some embodiments, the first part 110 and the second part 111 may be welded to each other, and have surfaces that are flush with each other. Alternatively, a groove is disposed on a surface of the first part 110, so that the second part 111 is embedded in the groove, and surfaces of the first part and the second part are located on a same surface. Alternatively, the second part 111 is directly disposed, for example, is welded to a surface of the first part 110.

In the foregoing solution, in some embodiments, the material of the housing 11 of the battery cell 10, that is, the material of the first part 110, may be made of aluminum or another metal material having a low surface energy. To improve the stability between the first insulating film 12 and the housing 11 in the some embodiments, a metal material having a high surface energy may be set. For example, the surface energy of iron is higher than the surface energy of aluminum. Therefore, the material of the second part 111 may be iron or another metal material having a surface energy higher than that of aluminum, to improve the connection strength between the first insulating film 12 and the housing 11, so that the battery has high reliability.

According to some embodiments of this application, the first part 110 is a non-metal layer, and the second part 111 is a fourth metal layer and/or an oxide layer.

In some embodiments, the body of the housing 11 may be made of a non-metal material. That is, the first part 110 may be a non-metal layer. For example, the first part may be a plexiglass layer or a polypropylene layer. Plexiglass is used as an example for description. A main part of the housing 11 is made of plexiglass, and a surface of the plexiglass is provided with a groove structure, so that the second part 111 having a large surface energy is disposed in the groove. The second part 111 may be a fourth metal layer disposed in the groove, for example, an iron layer or an oxide layer such as an aluminum oxide layer. To improve connection stability between the second part 111 and the first part 110, the groove may be filled with an adhesive.

In the foregoing solution, to reduce manufacturing costs of the battery, the housing 11 of the battery cell 10 may be made of a non-metal material. That is, the first part 110 of the housing 11 may be a non-metal layer. The material of the non-metal layer includes but is not limited to plexiglass or polypropylene. However, the surface energy of the non-metal layer is low. Therefore, the second part 111 may be disposed, and the second part 111 may be a fourth metal layer or an oxide layer having a large surface energy, to alleviate a problem that the bonding force between the first part 110 and the adhesive layer 13 is low, and reduce a risk that the first insulating film 12 falls off due to an insufficient bonding force between the adhesive layer 13 and the housing 11, thereby improving reliability of the battery.

According to some embodiments of this application, the outer surface of the second part 111 is higher than the outer surface of the first part 110 in the thickness direction of the housing 11. Alternatively, according to some other embodiments of this application, the outer surface of the second part 111 and the outer surface of the first part 110 are flush with each other. Alternatively, according to some other embodiments of this application, the outer surface of the second part 111 is lower than the outer surface of the first part 110.

In some embodiments, the first part 110 may be a main part of the housing 11. With reference to FIG. 5, the second part 111 may be directly disposed on the outer surface of the first part 110 in the thickness direction of the housing 11, so that on a same surface of the housing 11, the outer surface of the second part 111 is higher than the outer surface of the first part 110. For example, the second part 111 may be an aluminum oxide layer formed on a conventional aluminum housing.

In some embodiments, the first part 110 may be a main part of the housing 11, a groove may be formed on a surface of the first part 110 in the thickness direction of the housing 11, and the second part 111 may be directly disposed in the groove, so that on a same surface of the housing 11, the outer surface of the second part 111 is flush with an outer surface of a non-groove part of the first part 110. For example, the second part 111 may be an aluminum oxide layer formed in a groove disposed on a conventional aluminum housing.

In some embodiments, the first part 110 may be a main part of the housing 11, a groove may be formed on a surface of the first part 110 in the thickness direction of the housing 11, and the second part 111 may be directly disposed in the groove, so that on a same surface of the housing 11, the outer surface of the second part 111 is lower than the outer surface of the first part 110. For example, the second part 111 may be an aluminum oxide layer formed in a groove disposed on a conventional aluminum housing, and the groove is deep, or the aluminum oxide layer is thin.

In the foregoing solution, in some embodiments, the outer surface of the second part 111 is higher than the outer surface of the first part 110, so as to facilitate connection to the adhesive layer 13, thereby facilitating assembly of the first insulating film 12. In some embodiments, the outer surface of the second part 111 may be flush with the outer surface of the first part 110, so as to reduce as much as possible the extent to which a joint among the first insulating film 12, the adhesive layer 13, and the second part 111 protrudes relative to the entire outer contour of the battery cell 10, thereby improving the flatness of the outer contour of the battery cell 10. In some embodiments, the outer surface of the second part 111 may be lower than the outer surface of the first part 110, thereby effectively reducing the extent to which a joint among the first insulating film 12, the adhesive layer 13, and the second part 111 protrudes relative to the entire outer contour of the battery cell 10, and improving flatness of the outer contour of the battery cell 10.

According to some embodiments of this application, a melting point of the adhesive layer 13 is P1, a melting point of the first insulating film 12 is P2, and |P1 - P2| ≤ 30 in unit of °C is satisfied.

|P1 - P2| may refer to an absolute value of P1 minus P2.

In some embodiments, a material of the adhesive layer 13 may be an MPP adhesive. The MPP adhesive may refer to a part made of a microcellular polypropylene foam material, and a full name of MPP may be MicrocellularPolypropylenefoam.

In the foregoing solution, a difference between the melting point P1 of the adhesive layer 13 and the melting point P2 of the first insulating film 12 is 30°C, that is, the adhesive layer and the first insulating film have similar melting points, for example, the difference is 1°C, 2°C, 3°C, ..., 28°C, 29°C, or 30°C, thereby facilitating interconnection between the adhesive layer and the first insulating film. In some embodiments, the adhesive layer 13 and the first insulating film 12 may be in a hot-melting connection. Because the adhesive layer and the first insulating film have similar melting points, it is easy to hot-melt the adhesive layer 13 and the first insulating film 12 to each other, thereby reducing the difficulty in connection between the adhesive layer 13 and the first insulating film 12, improving connection strength between the adhesive layer 13 and the first insulating film 12, and reducing a risk that the first insulating film 12 falls off, so that the battery 100 has high reliability.

In some other embodiments, a difference between the melting point P1 of the adhesive layer 13 and the melting point P2 of the first insulating film 12 is 31°C, 32°C, 33°C, or the like.

According to some embodiments of this application, the first insulating film 12 is in a hot-melting connection to the adhesive layer 13.

In some embodiments, the first insulating film 12 may be connected to the adhesive layer 13 through hot-melting. In some other embodiments, the first insulating film 12 may alternatively be connected to the adhesive layer 13 through bonding. In some other embodiments, the first insulating film 12 is in a hot-melting connection to the adhesive layer 13 on a part corresponding to the second part 111, and the first insulating film 12 may be bonded to the adhesive layer 13 at another part.

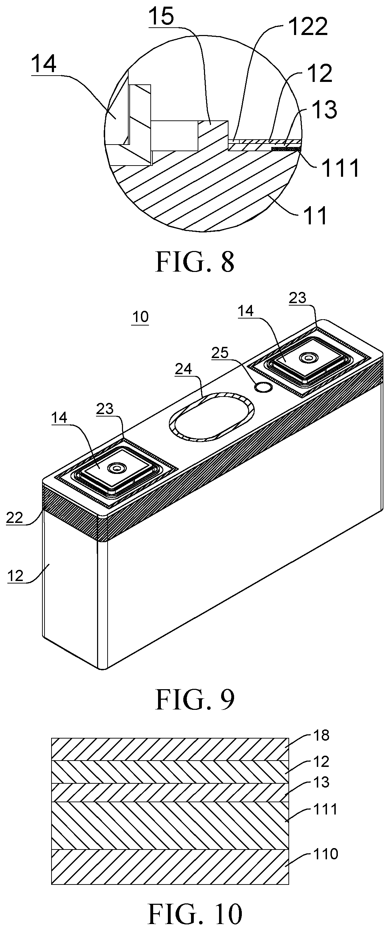

In some embodiments, when being not assembled to the housing 11 of the battery cell 10, the first insulating film 12 may have a flattened sheet-shaped structure, and covers the housing 11 through folding. The first insulating film 12 may be in a hot-melting connection to the adhesive layer 13 on a part corresponding to the second part 111. Referring to FIG. 9, a part on which a section line is drawn in FIG. 9 may be an area of the second part 111, that is, may be a part on which the first insulating film 12 is hot-melted to the adhesive layer 13. In FIG. 9, parts on which section lines are drawn may refer to a second connecting portion 22, a third connecting portion 23, a fourth connecting portion 24, and a fifth connecting portion 25.

In the foregoing solution, the first insulating film 12 and the adhesive layer 13 are in a hot-melting connection, thereby improving connection strength between the adhesive layer 13 and the first insulating film 12, and reducing a risk that the first insulating film 12 falls off, so that the battery 100 has high reliability.

According to some embodiments of this application, the battery cell 10 further includes a second insulating film 18 (as shown in FIG. 10, FIG. 10 is a schematic diagram of a first part 110, a second part 111, an adhesive layer 13, a first insulating film 12, and a second insulating film 18 according to some embodiments of this application), and the second insulating film 18 is connected to a surface of the first insulating film 12 that faces away from the adhesive layer 13.

In some embodiments, materials of the first insulating film 12 and the second insulating film 18 may be the same. In some other embodiments, materials of the first insulating film 12 and the second insulating film 18 may be different.

In the foregoing solution, the second insulating film 18 is disposed on the outer surface of the first insulating film 12, so that the housing 11 can be further protected, and therefore, the battery 100 has high reliability.

According to some embodiments of this application, the first insulating film 12 is in a hot-melting connection to the second insulating film 18.

In the foregoing solution, the first insulating film 12 and the second insulating film 18 are in a hot-melting connection. In an aspect, the difficulty in connection between the first insulating film 12 and the second insulating film 18 can be reduced. In another aspect, the connection strength between the first insulating film 12 and the second insulating film 18 can be improved, and the risk that the second insulating film 18 falls off can be reduced, so that the battery 100 has high reliability.

According to some embodiments of this application, referring to FIG. 6 and FIG. 7, FIG. 6 is an internal schematic diagram of a battery cell 10 according to some embodiments of this application, and FIG. 7 is an enlarged view at a position A in FIG. 6.

A housing 11 includes a case 112 and an end cover 113, the case 112 has an opening 1120, the end cover 113 is connected to the case 112 and closes the opening 1120, and the end cover 113 is connected to the case 112 to form a first connecting portion 21. A first insulating film 12 covers the first connecting portion 21.

In some embodiments, the case 112 and the end cover 113 may be two components independent of each other. The end cover 113 and the end cover 113 are connected to each other to form the first connecting portion 21, so that the end cover 113 closes the opening 1120 of the case 112 to reduce a risk that a foreign object affects the inside of the housing 11. In some embodiments, the end cover 113 may be connected to the case 112 through welding, that is, the first connecting portion 21 may be a weld. In some other embodiments, the end cover 113 may be connected to the case 112 through bonding. In this case, the first connecting portion 21 may be a bonding component.

That the first insulating film 12 covers the first connecting portion 21 may mean that the first connecting portion 21 is not exposed to the external world, and the first insulating film 12 separates the external world and the first connecting portion 21 from each other, so as to safeguard or protect the first insulating film 12.

In the foregoing solution, the housing 11 includes the case 112 and the end cover 113, and the first connecting portion 21 formed by connecting the end cover 113 to the case 112 is a weak part of the housing 11. When the battery cell 10 is impacted, an electrolyte in the housing 11 is prone to leak from the first connecting portion 21. Therefore, the first connecting portion 21 can be protected by covering the first connecting portion 21 with the first insulating film 12, to reduce a risk of leakage of the electrolyte, so that the battery 100 has high reliability.

According to some embodiments of this application, referring to FIG. 3, the first insulating film 12 includes a first insulating sub-film 120 and a second insulating sub-film 121, the first insulating sub-film 120 covers at least one part of an outer surface of the end cover 113, and the second insulating sub-film 121 covers at least one part of an outer surface of the case 112. The second insulating sub-film 121 is connected to the second part 111 by using the adhesive layer 13 to form a second connecting portion 22, and the second connecting portion 22 is disposed in a circumferential direction of the opening 1120.

In some implementations, the first insulating sub-film 120 and the second insulating sub-film 121 may be connected to each other. The first insulating sub-film 120 may be a part of the first insulating film 12, and the part of the first insulating film 12 covers at least one part of the outer surface of the end cover 113. For example, when an electrode terminal 14 (a component of the battery cell 10 that is configured to implement output and input of electric energy, and in some embodiments, which is also referred to as a terminal by a person skilled in the art) is mounted on the end cover 113, the part of the first insulating film 12 does not cover a part of the end cover 113 on which the electrode terminal 14 is mounted.

The second insulating sub-film 121 may be a part of the first insulating film 12, and the part of the first insulating film 12 covers at least one part of the outer surface of the housing 11. In some embodiments, the second insulating sub-film 121 may cover the entire outer surface of the housing 11.

The second connecting portion 22 is a component formed by connecting the second insulating sub-film 121 to the second part 111 by using the adhesive layer 13, and is disposed in the circumferential direction of the opening 1120. In some embodiments, the second connecting portion 22 can surround the first connecting portion 21. With reference to FIG. 3 and FIG. 7, the first connecting portion 21 is located between an inner side of the housing 11 and an outer side of the end cover 113, and the second connecting portion 22 is located on an outer side of the housing 11 and is annular.

In some embodiments, referring to FIG. 3, a part indicated by the second connecting portion 22 and a remaining part on which a fill line is drawn in FIG. 3 may refer to a part on which the second part 111 is located, and a remaining blank part may refer to a part on which the second part 111 is not disposed. In some other embodiments, the second part 111 may be disposed on all of the outer surface of the case 112.

In the foregoing solution, the second insulating sub-film 121 is connected to the second part 111 by using the adhesive layer 13 to form the second connecting portion 22, and the second connecting portion 22 is disposed in the circumferential direction of the opening 1120, to reduce a risk that the first insulating film 12 on the corresponding part is separated from the case 112, and collaborates with the first insulating sub-film 120 of the first insulating film 12, to reduce a risk that the electrolyte leaking from the first connecting portion 21 leaks out of the first insulating film 12 and affects an object outside the battery cell 10 (for example, an adjacent battery cell 10, another component, or the external environment), so that the battery 100 has high reliability.

According to some embodiments of this application, refer to FIG. 3 and FIG. 4. The battery cell 10 further includes an electrode terminal 14, the electrode terminal 14 is mounted on the housing 11, the first insulating film 12 has a first through-hole 122 for exposing the electrode terminal 14, and the first insulating film 12 is connected to the second part 111 by using the adhesive layer 13 to form a third connecting portion 23. The third connecting portion 23 is disposed around the electrode terminal 14.

The electrode terminal 14 is a component mounted on the housing 11, and can implement input and output of electric energy. In some embodiments, a person skilled in the art also refers to the electrode terminal 14 as a terminal. When having positive polarity, the electrode terminal 14 is a positive terminal. When having negative polarity, the electrode terminal 14 is a negative terminal. The positive terminal and the negative terminal may be mounted on a same wall portion of the housing 11, or may be mounted on different wall portions of the housing 11. In some embodiments, a through-hole is formed on a wall portion of the housing 11, and the electrode terminal 14 is inserted into the through-hole and is mounted on the housing 11 in a manner such as riveting. In some embodiments, the electrode terminal 14 is mounted on the end cover 113 of the housing 11.

The first insulating film 12 is provided with a first through-hole 122. The first through-hole 122 can expose the electrode terminal 14 to the outside, so that the electrode terminal 14 is electrically connected to an external component to implement input and output of electric energy. In some embodiments, when there are two electrode terminals 14, the first insulating film 12 are also correspondingly provided with two first through-holes 122.

The third connecting portion 23 is a component formed by connecting the first insulating film 12 to the second part 111 by using the adhesive layer 13, is located around the first through-hole 122, and is disposed in a circumferential direction of the electrode terminal 14. With reference to some embodiments provided above, the third connecting portion 23 may be a component formed by connecting the first insulating sub-film 120 to the second part 111 by using the adhesive layer 13.

In some embodiments, referring to FIG. 3, a part indicated by the third connecting portion 23 and a remaining part on which a fill line is drawn in FIG. 3 may refer to a part on which the second part 111 is located, and a remaining blank part may refer to a part on which the second part 111 is not disposed. In some other embodiments, the second part 111 may be disposed on all of the outer surface of the case 112.

In the foregoing solution, in an aspect, the first through-hole 122 is disposed on the first insulating film 12, so that the electrode terminal 14 can be exposed to implement output and input of electric energy of the battery cell 10. In another aspect, the first insulating film 12 is connected to the second part 111 by using the adhesive layer 13 to form the third connecting portion 23, thereby improving connection strength between the surrounding insulating film corresponding to the electrode terminal 14 and the housing 11, effectively protecting the part of the housing 11 on which the electrode terminal 14 is mounted, and reducing a risk that the electrolyte leaks from the part of the housing 11 on which the electrode terminal 14 is mounted, or reducing a risk that the battery cell 10 is short-circuited because the electrolyte leaking from another part (the electrolyte leaking from another part of the housing 11 or the electrolyte leaking from another battery cell 10) enters the battery cell 10 from the part of the housing 11 on which the electrode terminal 14 is mounted, so that the battery 100 has high reliability.

In some embodiments, when the battery cell 10 is used upside down, that is, when the electrode terminal 14 is a component in the battery cell 10 that is close to the ground, a risk that the electrolyte leaks from the part of the housing 11 on which the electrode terminal 14 is mounted is high. Therefore, by disposing the third connecting portion 23, the risk that the electrolyte leaks from the part of the housing 11 on which the electrode terminal 14 is mounted can be reduced, and a risk that the electrolyte leaking from the part of the housing 11 on which the electrode terminal 14 is mounted leaks out of the first insulating film 12 can be reduced.

According to some embodiments of this application, referring to FIG. 8, FIG. 8 is an enlarged view at a position B in FIG. 6. The outer surface of the housing 11 is provided with a protrusion 15, the protrusion 15 is disposed around the electrode terminal 14, and the protrusion 15 is exposed by the first through-hole 122.

Referring to FIG. 8, the protrusion 15 is a component protruding from the outer surface of the housing 11. The protrusion 15 is annular and is disposed around the electrode terminal 14 to surround the electrode terminal 14. In some embodiments, a gap exists between the protrusion 15 and the electrode terminal 14, to reduce interference from the protrusion 15 to the electrode terminal 14, making it convenient for the electrode terminal 14 to be electrically connected to an external component. That the protrusion 15 is exposed by the first through-hole 122 may be understood as that the protrusion 15 is located in the first through-hole 122, that is, the electrode terminal 14 is located on an inner side of the annular protrusion 15, and the third connecting portion 23 is located on an outer side of the annular protrusion 15.

The protrusion 15 may be a component independent of the housing 11, and may be made of an insulation material. The protrusion 15 may alternatively be a component formed by the housing 11. For example, the protrusion 15 may be a component formed by stamping the housing 11.

In the foregoing solution, the protrusion 15 is disposed, and the protrusion 15 is disposed around the electrode terminal 14, so as to protect the electrode terminal 14 and block flow of the electrolyte, thereby reducing a risk that the battery cell 10 is short-circuited because the electrolyte leaks from a part of the case 112 on which the electrode terminal 14 is not mounted and acts on the electrode terminal 14, and improving reliability of the battery 100. In some embodiments, when the battery cell 10 is inverted, or the electrode terminal 14 is a component of the battery cell 10 that is close to the ground, the electrolyte falls in drops in a direction from the protrusion 15 to the ground under the effect of gravity due to disposition of the protrusion 15, thereby reducing a risk that the electrolyte acts on the electrode terminal 14.

According to some embodiments of this application, the third connecting portion 23 is disposed in a circumferential direction of the protrusion 15 and is located on an outer side of the protrusion 15.

In the foregoing solution, the third connecting portion 23 is located on an outer side the protrusion 15, that is, the third part 13 does not interfere with the protrusion 15, thereby effectively reducing the difficulty in connection among the second part 111, the adhesive layer 13, and the first insulating film 12, and improving manufacturing efficiency of the battery cell.

In some other embodiments, the third connecting portion 23 may alternatively be located on the protrusion 15, or located on an inner side of the protrusion 15.

According to some embodiments of this application, with reference to FIG. 4 and FIG. 9, FIG. 9 is a schematic diagram of a battery cell 10 according to some other embodiments of this application.

The battery cell 10 further includes a pressure-relief portion 16, the pressure-relief portion 16 is disposed on the housing 11, and the first insulating film 12 covers the pressure-relief portion 16. The first insulating film 12 is connected to the second part 111 by using the adhesive layer 13 to form a fourth connecting portion 24, and the fourth connecting portion 24 is disposed around the pressure-relief portion 16.

The pressure-relief portion 16 is a component disposed on the housing 11, and can release an internal pressure of the battery cell 10, so that the battery cell 10 has high reliability. In some embodiments, the pressure-relief portion 16 may be a structure disposed on the housing 11, such as a pressure-relief valve or a nick. In some embodiments, the pressure-relief portion 16 may be disposed on the end cover 113.

The fourth connecting portion 24 is a component formed by connecting the first insulating film 12 to the second part 111 by using the adhesive layer 13, and is disposed around the pressure-relief portion 16. With reference to some embodiments provided above, the fourth connecting portion 24 may be a component formed by connecting the first insulating sub-film 120 to the second part 111 by using the adhesive layer 13.

In some embodiments, referring to FIG. 9, a part indicated by the fourth connecting portion 24 and a remaining part on which a fill line is drawn in FIG. 9 may refer to a part on which the second part 111 is located, and a remaining blank part may refer to a part on which the second part 111 is not disposed. In some other embodiments, the second part 111 may be disposed on all of the outer surface of the case 112.

In the foregoing solution, the first insulating film 12 covers the pressure-relief portion 16, and the first insulating film 12 is connected to the second part 111 by using the adhesive layer 13 to form the fourth connecting portion 24. The fourth connecting portion 24 is disposed around the pressure-relief portion 16, to reduce a risk that the surrounding insulating film corresponding to the pressure-relief portion 16 is separated from the housing 11, thereby reducing a risk that the electrolyte leaks from the part of the housing 11 on which the pressure-relief portion 16 is disposed, or reducing a risk that the electrolyte leaking from the part of the housing 11 on which the pressure-relief portion 16 is disposed leaks out of the insulating film, so that the battery 100 has high reliability.

According to some embodiments of this application, the housing 11 is provided with a liquid injection hole 114, the battery cell 10 further includes a plugging member 17, the plugging member 17 plugs the liquid injection hole 114, and the first insulating film 12 covers the plugging member 17. The insulating film is connected to the second part 111 by using the adhesive layer 13 to form a fifth connecting portion 25, and the fifth connecting portion 25 is disposed around the liquid injection hole 114.

The liquid injection hole 114 is a hole structure disposed on the housing 11, and an electrolyte may be injected into the housing 11 through the liquid injection hole 114. In some embodiments, the liquid injection hole 114 may be disposed on the end cover 113 of the housing 11. The plugging member 17 is a component for plugging the liquid injection hole 114, and may be a structure coverable of plugging the liquid injection hole 114, such as a plugging nail or a plugging screw.

The fifth connecting portion 25 is a component formed by connecting the first insulating film 12 to the second part 111 by using the adhesive layer 13, and is disposed around the plugging member 17. With reference to some embodiments provided above, the fifth connecting portion 25 may be a component formed by connecting the first insulating sub-film 120 to the second part 111 by using the adhesive layer 13.

In some embodiments, referring to FIG. 9, a part indicated by the fifth connecting portion 25 and a remaining part on which a fill line is drawn in FIG. 9 may refer to a part on which the second part 111 is located, and a remaining blank part may refer to a part on which the second part 111 is not disposed. In some other embodiments, the second part 111 may be disposed on all of the outer surface of the case 112.

In the foregoing solution, the first insulating film 12 covers the plugging member 17, and the insulating film is connected to the second part 111 by using the adhesive layer 13 to form the fifth connecting portion 25. The fifth connecting portion 25 is disposed around the pressure-relief portion 16, to reduce a risk that the surrounding insulating film corresponding to the plugging member 17 is separated from the housing 11, thereby reducing a risk that the electrolyte leaks from the part of the housing 11 on which the plugging member 17 is mounted, or reducing a risk that the electrolyte leaking from the part of the housing 11 on which the plugging case is mounted leaks out of the insulating film, so that the battery 100 has high reliability.

According to some embodiments of this application, a battery 100 is further provided. The battery 100 includes any battery cell 10 described above.

According to some embodiments of this application, a power-consuming apparatus is further provided. The power-consuming apparatus includes the battery 100 provided above, and/or the battery cell 10 provided above. The battery 100 is configured to provide electric energy. The battery cell 10 is configured to provide electric energy.

According to some embodiments of this application, refer to FIG. 3 to FIG. 9.

Some embodiments of this application provide a battery cell 10. The battery cell 10 includes a housing 11, a first insulating film 12, and an adhesive layer 13. A housing 11 includes a case 112 and an end cover 113, the case 112 has an opening 1120, the end cover 113 is connected to the case 112 and closes the opening 1120, and the end cover 113 is connected to the case 112 to form a first connecting portion 21. In some embodiments, the end cover 113 and the case 112 may be welded to each other, and the first connecting portion 21 is a weld. The end cover 113 is provided with a liquid injection hole 114, and the liquid injection hole 114 is used for injecting an electrolyte into the housing 11. A plugging member 17 is mounted on the end cover 113, and the plugging member 17 plugs the liquid injection hole 114. An electrode terminal 14 and a pressure-relief portion 16 are mounted on the end cover 113.

The housing 11 includes a first part 110 and a second part 111 formed on the first part 110. In some embodiments, the first part 110 is an aluminum layer, that is, a main body of the housing 11 is an aluminum housing, and the second part 111 is formed on an outer surface of the aluminum housing. In some embodiments, the second part 111 is made of chromium oxide formed through an electroplating process. In some other embodiments, the second part 111 is made of aluminum oxide formed through an anodizing process. In some embodiments, a thickness of the second part 111 is M, satisfying 18 um ≤ M ≤ 100 um.

The first insulating film 12 includes a first insulating sub-film 120 and a second insulating sub-film 121, the first insulating sub-film 120 covers the end cover 113, and the second insulating sub-film 121 covers the case 112. The second insulating sub-film 121 is connected to the second part 111 by using the adhesive layer 13 to form a second connecting portion 22, and the second connecting portion 22 is disposed in a circumferential direction of the opening 1120. In some embodiments, the second connecting portion 22 may be formed between the first insulating film 12 and the adhesive layer 13 through a hot-melting process. The first insulating sub-film 120 of the first insulating film 12 may be provided with a first through-hole 122. The first through-hole 122 can expose the electrode terminal 14. A part of the first insulating film 12 located around the first through-hole 122 is connected to the second part 111 by using the adhesive layer 13 to form a third connecting portion 23. In some embodiments, the third connecting portion 23 may be formed between the first insulating film 12 and the adhesive layer 13 through a hot-melting process. As shown in FIG. 8, to reduce a risk that the battery cell 10 is short-circuited because the external electrolyte acts on the electrode terminal 14, an outer surface of the end cover 113 is provided with a protrusion 15, and the protrusion 15 is exposed by the first through-hole 122. The first insulating film 12 is connected to the second part 111 by using the adhesive layer 13 to form a fourth connecting portion 24, and the fourth connecting portion 24 is disposed around the pressure-relief portion 16.

In some embodiments, the fourth connecting portion 24 may be formed between the first insulating film 12 and the adhesive layer 13 through a hot-melting process. The first insulating film 12 is connected to the second part 111 by using the adhesive layer 13 to form a fifth connecting portion 25, and the fifth connecting portion 25 is disposed around the liquid injection hole 114.

In some embodiments, the fifth connecting portion 25 may be formed between the first insulating film 12 and the adhesive layer 13 through a hot-melting process.

Some embodiments of this application provide a comparative example and an example. It is proved that the second part 111 is formed on the outer surface of the first part 110 to improve a bonding force between the adhesive layer 13 and the housing 11. The comparative example is about a bonding force between the housing 11 and the adhesive layer 13 of the battery cell 10 whose housing 11 is a conventional aluminum housing. The example is about a bonding force (in some embodiments, a person skilled in the art also refers to the bonding force as an adhesive force) between the housing 11 and the adhesive layer 13 of the battery cell 10 having a surface on which the second part 111 is formed. The bonding force may be measured by using a peeling test method, for example, may be measured by using a peeling tester. Referring to Table 1, in Table 1, "a housing having a surface on which aluminum oxide is formed (the thickness of aluminum oxide is 30 um)" may refer to a housing having aluminum oxide with a thickness of 30 um formed on an outer surface of a conventional aluminum housing; and "a housing having a surface on which chromium oxide is formed (the thickness of aluminum oxide is 50 um)" may refer to a housing having chromium oxide with a thickness of 50 um formed on an outer surface of a conventional aluminum housing.

**Table 1:**

| | Conventional aluminum housing | Housing having a surface on which aluminum oxide is formed (the thickness of aluminum oxide is 30 um) | Housing having a surface on which chromium oxide is formed (the thickness of aluminum oxide is 50 um) |
|---|---|---|---|
| Bonding force (peeling test) | 421 N/m | 567 N/m | 1208 N/m |

It can be seen from Table 1 that, the bonding force between the housing 11 having a surface on which the second part 111 is formed and the adhesive layer 13 is larger, and it is more difficult for the first insulating film 12 to be separated from the housing 11. Therefore, the reliability of the battery cell 10 is higher.

The above descriptions are merely preferred embodiments of this application and are not intended to limit this application. For a person skilled in the art, this application may have various modifications and changes. Any modification, equivalent replacement, or improvement made without departing from the spirit and principle of this application shall fall within the protection scope of this application.

## Claims

1. A battery cell, comprising:
a housing, comprising a first part and a second part, wherein the first part is connected to the second part, and a surface energy of an outer surface of the second part is greater than a surface energy of an outer surface of the first part;
a first insulating film, covering at least one part of the housing; and
an adhesive layer, disposed between the second part and the first insulating film and configured to connect the first insulating film to the second part.

2. The battery cell according to claim 1, wherein
the surface energy of the outer surface of the second part is p, satisfying p > 421 N/m.

3. The battery cell according to claim 2, wherein
500 N/m ≤ p ≤ 1500 N/m is satisfied.

4. The battery cell according to any one of claims 1 to 3, wherein
the first part is a first metal layer, and the second part is an oxide layer.

5. The battery cell according to claim 4, wherein
the oxide layer is formed on the outer surface of the first metal layer.

6. The battery cell according to claim 4 or 5, wherein
the second part is made of chromium oxide or nickel oxide.

7. The battery cell according to claim 4 or 5, wherein
the first part is made of aluminum, and the second part is made of aluminum oxide.

8. The battery cell according to any one of claims 4 to 7, wherein
a thickness of the second part is M, satisfying 18 um ≤ M ≤ 100 um.

9. The battery cell according to any one of claims 1 to 8, wherein
a surface of the second part connected to the adhesive layer is a bumpy surface.

10. The battery cell according to any one of claims 1 to 3, wherein
the first part is a second metal layer, and the second part is a third metal layer.

11. The battery cell according to any one of claims 1 to 3, wherein
the first part is a non-metal layer, and the second part is a fourth metal layer and/or an oxide layer.

12. The battery cell according to any one of claims 1 to 11, wherein
the outer surface of the second part is higher than the outer surface of the first part, or the outer surface of the second part is flush with the outer surface of the first part, or the outer surface of the second part is lower than the outer surface of the first part in a thickness direction of the housing.

13. The battery cell according to any one of claims 1 to 12, wherein
a melting point of the adhesive layer is P1, a melting point of the first insulating film is P2, and |P1 - P2| ≤ 30 in unit of °C is satisfied.

14. The battery cell according to any one of claims 1 to 13, wherein
the first insulating film is in a hot-melting connection to the adhesive layer.

15. The battery cell according to any one of claims 1 to 14, wherein
the battery cell further comprises a second insulating film, and the second insulating film is connected to a surface of the first insulating film facing away from the adhesive layer.

16. The battery cell according to claim 15, wherein
the first insulating film is in a hot-melting connection to the second insulating film.

17. The battery cell according to any one of claims 1 to 16, wherein
the housing comprises a case and an end cover, the case has an opening, the end cover is connected to the case and closes the opening, and the end cover is connected to the case to form a first connecting portion; and
the first insulating film covers the first connecting portion.

18. The battery cell according to claim 17, wherein
the first insulating film comprises a first insulating sub-film and a second insulating sub-film, the first insulating sub-film covers at least one part of an outer surface of the end cover, and the second insulating sub-film covers at least one part of an outer surface of the case; and
the second insulating sub-film is connected to the second part by using the adhesive layer to form a second connecting portion, and the second connecting portion is disposed in a circumferential direction of the opening.

19. The battery cell according to any one of claims 1 to 18, wherein
the battery cell further comprises an electrode terminal, the electrode terminal is mounted on the housing, the first insulating film has a first through-hole for exposing the electrode terminal, the first insulating film is connected to the second part by using the adhesive layer to form a third connecting portion, and the third connecting portion is disposed around the electrode terminal.

20. The battery cell according to claim 19, wherein
the outer surface of the housing is provided with a protrusion, the protrusion is disposed around the electrode terminal, and the protrusion is exposed by the first through-hole.

21. The battery cell according to claim 20, wherein
the third connecting portion is disposed in a circumferential direction of the protrusion and is located on an outer side of the protrusion.

22. The battery cell according to any one of claims 1 to 21, wherein
the battery cell further comprises a pressure-relief portion, the pressure-relief portion is disposed on the housing, and the first insulating film covers the pressure-relief portion; and
the first insulating film is connected to the second part by using the adhesive layer to form a fourth connecting portion, and the fourth connecting portion is disposed around the pressure-relief portion.

23. The battery cell according to any one of claims 1 to 22, wherein
the housing is provided with a liquid injection hole, the battery cell further comprises a plugging member, the plugging member plugs the liquid injection hole, and the first insulating film covers the plugging member; and
the first insulating film is connected to the second part by using the adhesive layer to form a fifth connecting portion, and the fifth connecting portion is disposed around the liquid injection hole.

24. A battery, comprising the battery cell according to any one of claims 1 to 23.

25. A power-consuming apparatus, comprising the battery according to claim 24 and/or the battery cell according to any one of claims 1 to 23.
